Europäisches Patentamt

European Patent Office

Office européen des brevets

(19)

(11) Veröffentlichungsnummer : **0 174 451**
**B1**

(12) **EUROPÄISCHE PATENTSCHRIFT**

(45) Veröffentlichungstag der Patentschrift :
03.01.90

(21) Anmeldenummer : 85107975.6

(22) Anmeldetag : 27.06.85

(51) Int. Cl.⁵ : **G 01 B   3/00, G 12 B   9/02**

(54) Positionsmesseinrichtung.

(30) Priorität : 11.08.84 DE 3429644

(43) Veröffentlichungstag der Anmeldung :
19.03.86 Patentblatt 86/12

(45) Bekanntmachung des Hinweises auf die Patenterteilung : 03.01.90 Patentblatt 90/01

(84) Benannte Vertragsstaaten :
AT CH DE FR GB IT LI NL SE

(56) Entgegenhaltungen :
EP—A— 0 035 651
EP—A— 0 049 743
FR—A— 2 295 403

(73) Patentinhaber : **Dr. Johannes Heidenhain GmbH**
**Nansenstrasse 17**
**D-8225 Traunreut (DE)**

(72) Erfinder : **Dangschat, Holmer, Dipl.-Ing.**
**Heinz-von-Stein-Strasse 25**
**D-8225 Traunreut (DE)**

## Beschreibung

Die Erfindung betrifft eine Positionsmeßeinrichtung gemäß dem Oberbegriff des Anspruchs 1.

Eine derartige Positionsmeßeinrichtung wird insbesondere bei Mehrkoordinatenmeßmaschinen zur Ermittlung von Abmessungen von Prüfkörpern und bei numerisch gesteuerten Bearbeitungsmaschinen zum Positionieren von Werkzeugen zur Bearbeitung von Werkstücken eingesetzt.

In der DE-PS 30 06 489 ist eine interferometrische Längenmeßeinrichtung mit einem längs einer Meßstrekke beweglichen, mit einem zu messenden Objekt verbundenen Bauteil beschrieben. Dieses Bauteil und die Meßstrecke sind zur Abschirmung gegen Umwelteinflüsse in einem evakuierten Hohlkörper untergebracht, der zwecks Durchführung eines Mitnehmers für das bewegliche Bauteil in Meßrichtung einen Längsschlitz aufweist. Zwischen dem Hohlkörper und dem beweglichen Bauteil strömt in einem Lagerspalt zur Abdichtung des Längsschlitzes eine unter Überdruck stehende Flüssigkeit. Zur Zuführung und Abführung der strömenden Flüssigkeit sind im Hohlkörper und im beweglichen Bauteil Kanäle vorgesehen, die den Längsschlitz ringförmig umgeben. Die Länge des beweglichen Bauteils in Meßrichtung ist mindestens doppelt so groß wie die Länge des Längsschlitzes, so daß bei dieser Längenmeßeinrichtung die Meßlänge durch die Länge des beweglichen Bauteils begrenzt ist.

Aus der DE-PS 22 07 374 ist eine Längenmeßeinrichtung bekannt, bei der eine Meßteilung und eine die Meßteilung abtastende Abtasteinheit in einem einen Längsschlitz aufweisenden Hohlkörper eingebracht sind, der mittels einer flexiblen Metallfolie abgedeckt ist, die über die Abtasteinheit gleitet und im gesamten Verschiebebereich der Abtasteinheit von am Hohlkörper angebrachten Magneten festgehalten wird. Bei dieser Meßeinrichtung muß die Metallfolie zur möglichst hermetischen Abschirmung des Hohlkörpers eng an der Abtasteinheit anliegen. Dieses enge Anliegen der Metallfolie an der Abtasteinheit hat aber Reibungseffekte bei der Meßbewegung zur Folge, die zu Deformationen der Abtasteinheit in Meßrichtung führen können, die der Meßgenauigkeit abträglich sind. Zudem entstehen durch das Aufbiegen der Metallfolie an den Enden der Abtasteinheit kleine, von der Metallfolie nicht verschlossene Bereiche des Längsschlitzes, so daß eine hermetische Abschirmung eines insbesondere evakuierten Raumes im Hohlkörper nicht gewährleistet ist. Eine gleichartige Längenmeßeinrichtung ist in der EP-A-0 049 743 beschrieben, bei der eine Meßteilung in einer Abtasteinheit abgetastet wird, die zum Teil in einem Hohlkörper mit einem Längsschlitz eingebracht ist. Der Längsschlitz wird von einem flexiblen Abdichtband gegen äußere Einflüsse abgeschirmt, das über die Abtasteinheit gleitet. An der der Abtasteinheit zugewandten Seite des Abdeckbandes ist die Meßteilung aufgebracht.

Die DE-PS 24 21 731 beschreibt eine interferometrische Längenmeßeinrichtung mit einem längs einer Meßstrecke beweglichen, mit einem zu messenden Objekt verbundenen Bauteil. Dieses Bauteil und die Meßstrecke sind zur Abschirmung in einem evakuierten Hohlkörper untergebracht, der zwecks Durchführung eines Mitnehmers für das bewegliche Bauteil einen Längsschlitz aufweist. Dieser Längsschlitz im Hohlkörper wird mittels biegsamer und dachförmig angeordneter Dichtlippen verschlossen, die den Mitnehmer zwischen sich aufnehmen ; zur hermetischen Abdichtung des Hohlkörpers ist der Raum um die Dichtlippen herum mit einer Flüsssigkeit, vorzugsweise Vakuumöl, ausgefüllt.

Die DE-PS 24 60 406 offenbart ebenfalls eine interferometrische Längenmeßeinrichtung gemäß der vorgenannten DE-PS 24 21 731. Der an den Enden des Mitnehmers auftretende Spalt an den Dichtlippen wird durch eine magnetische Flüssigkeit hermetisch verschlossen, die durch ein magnetisches Feld festgehalten wird.

Bei den beiden letztgenannten Längenmeßeinrichtungen müssen die Dichtlippen zur möglichst hermetischen Abschirmung des Hohlkörpers eng am Mitnehmer anliegen und daher elastisch mit hoher Rückstellkraft ausgebildet sein. Infolge der durch die hohen Rückstellkräfte auftretenden Reibungskräfte am Mitnehmer, insbesondere bei schrittweiser und langsamer Meßbewegung, kann der Mitnehmer Deformationen in Meßrichtung erfahren, die zu Meßungenauigkeiten führen können. Bei derart hochgenauen Meßeinrichtungen können selbst die geringsten Reibungskräfte am Mitnehmer zu einer Beeinflussung der Messung führen, da die Messungen im Wellenlängenbereich des Lichtes erfolgen.

Der Erfindung liegt die Aufgabe zugrunde, bei einer Positionsmeßeinrichtung der genannten Gattung eine hermetische Abschirmung eines Hohlkörpers ohne Beeinträchtigung der Meßgenauigkeit und ohne Begrenzung der Meßlänge anzugeben.

Diese Aufgabe wird erfindungsgemäß durch die Merkmale des Anspruchs 1 gelöst.

Die mit der Erfindung erzielten Vorteile bestehen insbesondere darin, daß mit einfachen Mitteln eine praktisch reibungsfreie Verschiebung des Mitnehmers bei der Meßbewegung ermöglicht wird, so daß Deformationen des Mitnehmers in Meßrichtung und damit verbundene Meßfehler nicht mehr auftreten können. Gleichzeitig wird eine hermetische Abschirmung des Innenraums des Hohlkörpers gegen Umwelteinflüsse erzielt, so daß insbesondere bei einem evakuierten Innenraum für die Meßstrecke keine ständige Nachevakuierung dieses Innenraumes mehr erfolgen muß. Zudem wird die Meßlänge nicht durch die Länge des beweglichen Bauteils in Form des Mitnehmers begrenzt.

Vorteilhafte Ausbildungen der Erfindung entnimmt man den abhängigen Ansprüchen.

Ein Ausführungsbeispiel der Erfindung wird anhand der Zeichnung näher erläutert.

Es zeigen

Figur 1 schematisch eine Positionsmeßeinrichtung in Form eines Laserinterferometers,

Figur 2 einen Querschnitt nach der Linie 2-2 und

Figur 3 einen Längsschnitt nach der Linie 3-3 der Positionsmeßeinrichtung nach Figur 1.

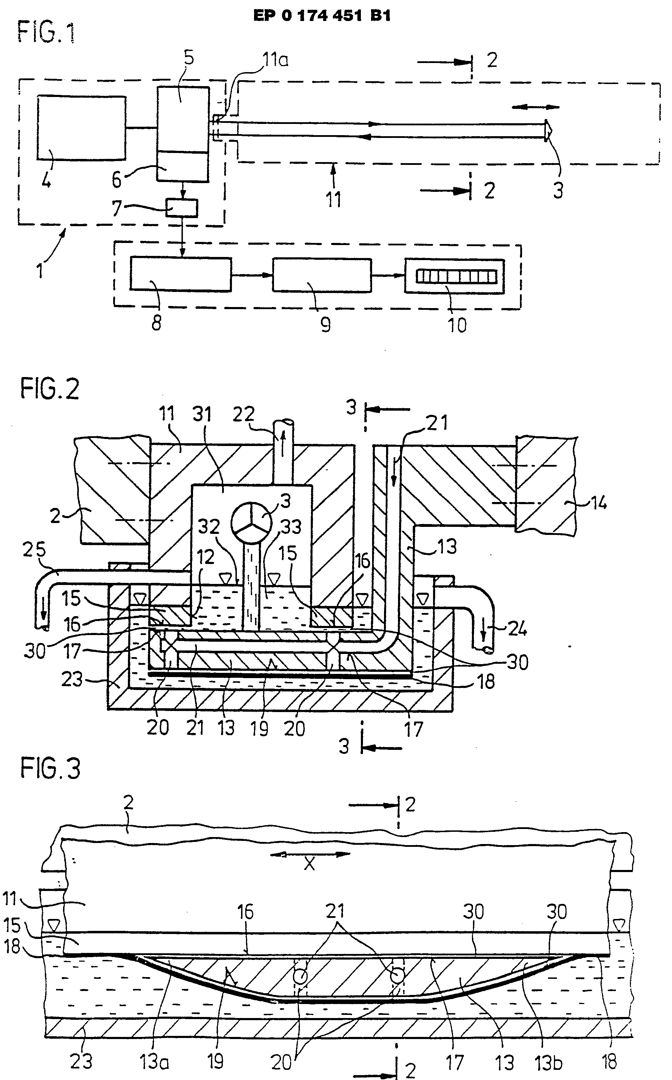

In Figur 1 ist schematisch eine Positionsmeßeinrichtung in Form eines Laserinterferometers 1 bekannter Bauart gezeigt, das an einem ersten zu messenden Objekt 2 (vgl. Fig. 2 und 3) befestigt ist und im Zusammenwirken mit einem beweglichen Bauteil 3 die Messung von Längen gestattet. Die Lichtquelle des Interferometers 1 besteht aus einem frequenzstabilisierten Laser 4. Eine Baueinheit 5 enthält die Interferometeroptik, die den Laserstrahl durch einen Strahlenteiler in einen Meßstrahl und in einen Bezugsstrahl aufspaltet. Der Meßstrahl und der Bezugsstrahl werden an einem Strahlenvereiniger wieder vereinigt und ergeben Interferenzerscheinungen, die von der Differenz der optischen Weglängen des Meßstrahls und des Bezugsstrahls abhängig sind. Durch Verschieben des beweglichen Bauteils 3 in Form eines Reflektors verändert sich die optische Weglänge des Meßstrahls, so daß sich in Abhängigkeit hiervon die Interferenzerscheinungen und die daraus auf photoelektrischem Wege abgeleiteten Signale ändern. Die Photodetektoren zur Umwandlung der optischen Signale in elektrische Signale befinden sich in der Baueinheit 6 und die Verstärker und Trigger für die Aufbereitung der elektrischen Signale in einer Baueinheit 7. Die Anzahl der bei einer Verschiebung des Reflektors 3 durchlaufenden Signalperioden werden von einem Vorwärts-/Rückwärtszähler 8 gezählt. In einem nachgeschalteten Rechner 9 erfolgt die Umrechnung der gemessenen Verschiebung in Dezimalwerte ; das Meßergebnis wird mittels einer Anzeigeeinheit 10 in digitaler Form angezeigt. Die Meßstrecke ist bei diesem Inteferometer 1 ins Vakuum gelegt. Der Meßstrahl gelangt durch ein Fenster 11a in einen evakuierten Hohlkörper 11. Die vorstehend beschriebene Interferometereinrichtung ist in ihren Einzelheiten nicht Gegenstand der Erfindung und daher auch nicht näher erläutert. Diese Interferometereinrichtung kann in beliebiger Weise aufgebaut sein.

In Figur 2 ist die Positionsmeßeinrichtung nach Figur 1 in einem Querschnitt nach der Linie 2-2 und in Figur 3 in einem Längsschnitt nach der Linie 3-3 dargestellt. Die Abschirmung der Meßstrecke sowie des beweglichen Bauteils 3 in Form des Reflektors erfolgt durch den längserstreckten Hohlkörper 11, der am ersten zu messenden Objekt 2 in beliebiger Weise befestigt ist. Der Hohlkörper 11 mit einem im Querschnitt U-förmigen Profil weist einen in Meßrichtung X verlaufenden Längsschlitz 12 auf, durch den ein Mitnehmer 13 hindurchgreift, der den Reflektor 3 mit einem zweiten zu messenden Objekt 14 verbindet. Das erste zu messende Objekt 2 kann durch einen Schlitten und das zweite zu messende Objekt 14 durch das Bett einer nicht gezeigten Werkzeugmaschine gebildet sein.

Der U-förmige Hohlkörper 11 weist an den Enden der beiden nach unten gerichteten Schenkel je eine längserstreckte Magnetleiste 15 mit einer ebenen Führungsfläche 16 auf, die jeweils mit einer ebenen Führungsfläche 17 des sich quer über das U-förmige Profil des Hohlkörpers 11 erstreckenden Mitnehmers 13 korrespondiert. Der gesamte Längsschlitz 12 des Hohlkörpers 11 ist mit einer flexiblen Metallfolie 18 abgedeckt, die sich im Bereich des Mitnehmers 13 über eine Gleitfläche 19 des Mitnehmers 13 erstreckt. Außerhalb des Mitnehmers 13 wird die flexible Metallfolie 18 von den beiden Magnetleisten 15 des Hohlkörpers 11 zur Abdichtung des Längsschlitzes 12 auf den beiden Führungsflächen 16 für den Mitnehmer 13 gehalten. Wie aus Figur 3 ersichtlich, verjüngen sich in Meßrichtung X die beiden Enden 13a, 13b des Mitnehmers 13, so daß bei der Meßbewegung des Mitnehmers 13 in Meßrichtung X die flexible Metallfolie 18 von den Magnetleisten 15 ohne nennenswerte Spaltbildung abgehoben wird und über die Gleitfläche 19 des Mitnehmers 13 gleitet.

Zur hermetischen Abdichtung des Innenraumes 31 des Hohlkörpers 11 mit der Meßstrecke für den Meßstrahl und mit dem Reflektor 3 sind an den beiden Führungsflächen 17 und in der Gleitfläche 19 des Mitnehmers 13 Bohrungen 20 vorgesehen, die jeweils über eine Leitung 21 im Mitnehmer 13 mit einer einen Überdruck aufweisenden Flüssigkeit 30, vorzugsweise Vakuumöl, versorgt werden. Zwischen den Führungsflächen 16 der Magnetleisten 15 und den Führungsflächen 17 des Mitnehmers 13 einerseits und der flexiblen Metallfolie 18 und der Gleitfläche 19 des Mitnehmers 13 andererseits befindet sich somit eine tragende Ölschicht 30, die einmal einen mechanischen Kontakt zwischen den Führungsflächen 16, 17 sowie der Gleitfläche 19 des Mitnehmers 13 und der Metallfolie 18 verhindert, so daß zwischen dem Mitnehmer 13 und den Magnetleisten 15 sowie der flexiblen Metallfolie 18 keine Reibungskräfte auftreten können, die zu einer Deformation des Mitnehmers 13 in Meßrichtung X bei der Meßbewegung führen und Meßungenauigkeiten nach sich ziehen können. Zum anderen bewirkt diese Ölschicht 30 aus Drucköl eine vollkommen hermetische Abdichtung des Innenraums 31 des Hohlkörpers gegen Umwelteinflüsse, da insbesondere bei einem Laserinterferometer sich die der Messung zugrundeliegende Wellenlänge in Abhängigkeit von atmosphärischen Einflüssen (Luftdruck, Temperatur, Feuchtigkeit, $CO_2$-Gehalt) ändert.

Der Innenraum 31 des Hohlkörpers 11 wird über eine Vakuumleitung 22 evakuiert ; eine ständige Nachevakuierung dieses Innenraumes 31 ist wegen der hermetischen Abdichtung durch die Ölschicht 30 nicht erforderlich. Das zwischen den Führungsflächen 16 der Magnetleisten 15 und den Führungsflächen 17 sowie zwischen der Gleitfläche 19 des Mitnehmers 13 und der flexiblen Metallfolie 18 nach außen austretende Dichtöl 30 wird in einer längserstreckten Ölwanne 23 mit einer Überlaufleitung 24 aufgefangen. Infolge der nach unten gerichteten Schenkel des Hohlkörpers 11 dringt das in den Innenraum 31 des Hohlkörpers 11 eintretende Dichtöl 30 unterhalb des inneren Ölspiegels 32, wo es unter dem hydrostatischen Druck der Ölsäule 33 im Innenraum 31 steht, und nicht in das Vakuum ein, wo es zu die Meßstrecke störenden Blasenbildungen kommen kann. Das in den Innenraum 31 des Hohlkörpers 11 eingedrungene Dichtöl 30 kann über eine evakuierte Überlaufleitung 25 abfließen.

Die flexible Metallfolie 18 wird bei einem evakuierten Hohlkörper 11 außer durch die Magnetleisten 15 zusätzlich noch durch den Unterdruck an den Führungsflächen 16 gehalten, so daß die Magnetleisten 15 in diesem Fall auch entfallen können und die Folie 18 aus einem beliebigen Material bestehen kann.

## Patentansprüche

1. Positionsmeßeinrichtung, insbesondere interferometrische Meßeinrichtung, zur Messung der Relativlage zweier Objekte (2, 14) mit einem längs einer Meßstrecke beweglichen, mit dem einen zu messenden Objekt (14) verbundenen Bauteil (3), das mitsamt der Meßstrecke durch einen Hohlkörper (11) gegen Umwelteinflüsse abgeschirmt ist, der zwecks Durchführung eines Mitnehmers (13) für das bewegliche Bauteil (3) in Meßrichtung X einen durch ein Dichtelement (18) abgedichteten Längsschlitz (12) aufweist, gekennzeichnet durch folgende Merkmale :

a) der Mitnehmer (13) weist sich in Meßrichtung X verjüngende Enden (13a, 13b) auf und erstreckt sich quer zur Meßrichtung X über den Längsschlitz (12), wobei Führungsflächen (17) des Mitnehmers (13) mit Führungsflächen (16) des Hohlkörpers (11) beiderseits des Längsschlitzes (12) korrespondieren ;

b) das Dichtelement (18) zur Abdichtung des gesamten Längsschlitzes (12) wird durch eine flexible Folie gebildet, die bei der Bewegung des Mitnehmers (13) über eine außenliegende Gleitfläche (19) des Mitnehmers (13) gleitet und außerhalb des Mitnehmers (13) an den Führungsflächen (16) des Hohlkörpers (11) anliegt ;

c) zur Abdichtung des Längsschlitzes (12) im Bereich des Mitnehmers (13) befindet sich jeweils eine Flüssigkeitsschicht (30) zwischen den Führungsflächen (17) des Mitnehmers (13) und den Führungsflächen (16) des Hohlkörpers (11) sowie zwischen der Gleitfläche (19) des Mitnehmers (13) und der flexiblen Folie (18).

2. Meßeinrichtung nach Anspruch 1, dadurch gekennzeichnet, daß die Führungsflächen (17) und die Gleitfläche (19) des Mitnehmers (13) Bohrungen (20) aufweisen, die zur Zuführung der Flüssigkeit (30) mit einer Leitung (21) verbunden sind.

3. Meßeinrichtung nach Anspruch 1, dadurch gekenzeichnet, daß die Flüssigkeitsschicht (30) einen Überdruck aufweist.

4. Meßeinrichtung nach Anspruch 1, dadurch gekennzeichnet, daß der Hohlkörper (11) evakuiert ist und eine evakuierte Überlaufleitung (25) aufweist.

5. Meßeinrichtung nach Anspruch 1, dadurch gekennzeichnet, daß die Flüssigkeitsschicht (30) aus Vakuumöl besteht.

6. Meßeinrichtung nach den Ansprüchen 1 und 4, dadurch gekennzeichnet, daß die flexible Folie (18) im Bereich des Längsschlitzes (12) an den Führungsflächen (16) des evakuierten Hohlkörpers (11) durch Unterdruck anliegt.

7. Meßeinrichtung nach Anspruch 1, dadurch gekennzeichnet, daß die flexible Folie (18) aus Metall besteht und im Bereich des Längsschlitzes (12) durch am Hohlkörper (11) angebrachte Magnetleisten (15) gehalten ist.

8. Meßeinrichtung nach Anspruch 1, dadurch gekennzeichnet, daß der Hohlkörper (11) ein im Querschnitt U-förmiges Profil aufweist, dessen den Längsschlitz (12) begrenzende Schenkel nach unten gerichtet sind, daß sich im evakuierten Innenraum (31) des Hohlkörpers (11) eine Flüssigkeitssäule (33) befindet, deren Flüssigkeitsspiegel (32) höher als die Flüssigkeitsschicht (30) zwischen den Führungsflächen (17) des Mitnehmers (13) und den Führungsflächen (16) des Hohlkörpers (11) liegt, so daß die aus der Flüssigkeitsschicht (30) in den evakuierten Innenraum (31) eindringende Flüssigkeit unterhalb des Flüssigkeitsspiegels (32) der Flüssigkeitssäule (33) eintritt.

9. Meßeinrichtung nach den Ansprüchen 1, 7 und 8, dadurch gekennzeichnet, daß die Magnetleisten (15) an den Enden der Schenkel des Hohlprofils (11) befestigt sind und die Führungsflächen (16) für den Mitnehmer (13) aufweisen.

## Claims

1. Position measuring device, especially interferometric measuring device, for measuring the relative position of two objects (2, 14), with a component (3) connected to the one object (14) to be measured, movable along a measuring path, which component, together with the measuring path is shielded against surrounding influences by a hollow body (11), which has, for the passage of a carrier (13) for the movable component (3) in the measuring direction X, a longitudinal slot (12) sealed by a sealing element (18), characterized by the following features :

a) the carrier (13) has tapering ends (13a, 13b) in the measuring direction X and extends transverse to the measuring direction X beyond the longitudinal slot (12), guide surfaces (17) of the carrier (13) corresponding with guide surfaces (16) of the hollow body (11) on both sides of the longitudinal slot (12) ;

b) the sealing element (18) for sealing the whole longitudinal slot (12) is formed by a flexible foil which, with the movement of the carrier (13), slides on an outwardly lying slide surface (19) of the carrier (13) and outside the carrier (13) ears on the guide surfaces (16) of the hollow body (11) ;

c) for sealing the longitudinal slot (12) in the region of the carrier (13) there is a liquid layer (30) between each of the guide surfaces (17) of the carrier (13) and the guide surfaces (16) of the hollow body (11) as well as between the slide surface (19) of the carrier (13) and the flexible foil (18).

2. Measuring device according to claim 1, characterized in that the guide surfaces (17) and the slide surface (19) of the carrier (13) have bores (20) which are connected to a line (21) for the supply of the liquid (30).

3. Measuring device according to claim 1, characterized in that the liquid (30) has an overpressure.

4. Measuring device according to claim 1, characterized in that the hollow body (11) is evacuated and has an evacuated overflow line (25).

5. Measuring device according to claim 1, characterized in that the liquid layer (30) consists of vacuum oil.

6. Measuring device according to claims 1 and 4, characterized in that the flexible foil (18) bears through under-pressure against the guide surfaces (16) of the evacuated hollow body (11) in the region of the longitudinal slot (12).

7. Measuring device according to claim 1, characterized in that the flexible foil (18) consists of metal and is retained in the region of the longitudinal slot (12) by magnetic strips (15) fitted to the hollow body (11).

8. Measuring device according to claim 1, characterized in that the hollow body (11) has a U-shaped profile in cross-section, of which the limbs delimiting the longitudinal slot (12) are downwardly directed, in that there is a liquid column (33) in the evacuated interior (31) of the hollow body (11), the meniscus (32) of which column is higher than the liquid layer (30) between the guide surfaces (17) of the carrier (13) and the guide surfaces (16) of the hollow body (11), so that the liquid penetrating into the evacuated interior (31) from the liquid layer (30) enters below the meniscus (32) of the liquid column (33).

9. Measuring device according to claims 1, 7 and 3, characterized in that the magnetic strips (15) are fixed to the ends of the limbs of the hollow profile (11) and comprise the guide surfaces (16) for the carrier (13).

**Revendications**

1. Dispositif de mesure de position, en particulier dispositif de mesure interférométrique, pour mesurer la position relative de deux objets (2, 14), comprenant un composant (3) relié à l'objet (14) à mesurer, mobile le long d'un trajet de mesure et protégé, conjointement avec le trajet de mesure, contre les effets environnants par un corps creux (11) qui comporte, pour le passage d'un organe d'entraînement (13) pour le composant mobile (3) dans la direction de mesure X, une fente longitudinale (12) fermée par un élément d'étanchéité (18), caractérisé par la combinaison des caractéristiques suivantes :

a) l'organe d'entraînement (13) présente des extrémités (13a, 13b) allant en s'effilant dans la direction de mesure X et s'étend transversalement à la direction de mesure X sur la fente longitudinale (12), des surfaces de guidage (17) de l'organe d'entraînement (13) correspondant avec des surfaces de guidage (16) du corps creux (11) de part et d'autre de la fente longitudinale (12) ;

b) l'élément d'étanchéité (18) pour l'obturation étanche de 12 fente longitudinale (12) en entier est constitué par une feuille flexible qui, lors du mouvement de l'organe d'entraînement (13) glisse sur une surface de glissement (19) extérieure de l'organe d'entraînement (13) et est appliquée à l'extérieur de l'organe d'entraînement (13), contre les surfaces de guidage (16) du corps creux (11) ;

c) pour l'obturation étanche de la fente longitudinale (12) dans la zone de l'organe d'entraînement (13), une couche de liquide (30) se trouve entre les surfaces de guidage (17) de l'organe d'entraînement (13) et les surfaces de guidage (16) du corps creux (11) ainsi qu'entre la surface de glissement (19) de l'organe d'entraînement (13) et la feuille flexible (18).

2. Dispositif de mesure suivant la revendication 1, caractérisé par le fait que les surfaces de guidage (17) et la surface de glissement (19) de l'organe d'entraînement (13) présentent des trous (20) reliés à une conduite (21) en vue de l'amenée du liquide (30).

3. Dispositif de mesure suivant la revendication 1, caractérisé par le fait que la couche de liquide (30) présente une surpression.

4. Dispositif de mesure suivant la revendication 1, caractérisé par le fait que le corps creux (11) est mis sous dépression et présente une conduite de trop plein (25) sous dépression.

5. Dispositif de mesure suivant la revendication 1, caractérisé par le fait que la couche de liquide (30) est constituée par de l'huile pour vide.

6. Dispositif de mesure suivant les revendications 1 et 4, caractérisé par le fait que la feuille flexible (18) est appliquée par dépression dans la zone de la fente longitudinale (12) contre les surfaces de guidage (16) du corps creux (11).

7. Dispositif de mesure suivant la revendication 1, caractérisé par le fait que la feuille flexible (18) est constituée de métal et est maintenue dans la zone de la fente longitudinale (12) par des baguettes magnétiques (15) disposées sur le corps creux (11).

8. Dispositif de mesure suivant la revendication 1, caractérisé par le fait que le corps creux (11) présente un profil transversal en U dont les ailes délimitant la fente longitudinale (12) sont tournées vers le bas, que dans l'espace intérieur (31) sous dépression du corps creux (11) se trouve une colonne de liquide (33) dont le niveau de liquide (12) est plus haut que la couche de liquide (30) entre les surfaces de guidage (17) de l'organe d'entraînement (13) et les surfaces de guidage (16) du corps creux (11) de manière que le liquide pénétrant dans l'espace intérieur (31) sous dépression arrive en dessous du niveau de liquide (32) de la colonne de liquide (33).

9. Dispositif de mesure suivant les revendications 1, 7 et 8, caractérisé par le fait que les baguettes magnétiques (15) sont fixées aux extrémités des aides du profilé creux (11) et présentent les surfaces de guidage (16) pour l'organe d'entraînement (13).

6

FIG.1

EP 0 174 451 B1

FIG.2

FIG.3

1